# EUROPEAN PATENT SPECIFICATION

(11) **EP 4 086 501 B1**
(45) Date of publication and mention of the grant of the patent: **03.09.2025**
(21) Application number: 20910221.9
(22) Date of filing: 30.06.2020
(51) Int. Cl.: F16M 11/38, A47B 23/04

(54) **STACKED-PLATE-TYPE MOBILE-DEVICE SUPPORT FRAME**
STÜTZRAHMEN MIT GESTAPELTEN PLATTEN FÜR MOBILE VORRICHTUNG
CADRE DE SUPPORT DE DISPOSITIF MOBILE DE TYPE À PLAQUES EMPILÉES

(30) Priority: 03.01.2020 CN 202020016341 U
(43) Date of publication of application: 09.11.2022
(73) Proprietor: Moft Inc, Los Angeles, CA 91748 (US); Lin, Ben-Tien, New Taipei City, Taiwan 247 (TW)
(72) Inventor: HE, Jia-jia, Los Angeles, California 91748 (US); LIN, Ben-Tien, Luzhou, New Taipei City, Taiwan 247 (CN)
(74) Representative: Michalski Hüttermann & Partner Patentanwälte mbB
(86) International application number: PCT/CN2020/099452
(87) International publication number: WO 2021/135130

(56) References cited:
- WO-A1-2004/006717
- WO-A1-2013/172615
- WO-A1-2013/172615
- CN-A- 101 788 100
- CN-A- 105 992 905
- CN-U- 204 717 269
- JP-B1- 6 508 408
- KR-Y1- 200 313 994
- US-A1- 2017 254 471
- US-A1- 2018 375 980

## Description

### FIELD OF INVENTION

The present invention relates to a mouse pad, in particular to a mouse pad having a mobile device support frame.

### BACKGROUND OF INVENTION

### Description of the Related Art

As electronic products are developed rapidly, electronic devices such as smart phones, tablet PCs, keyboards, and notebooks become very popular, and people are used to carry these electronic mobile devices for the purposes of communication, entertainment, and work and these electronic mobile devices facilitate users in the areas of communication, entertainment, work, etc.

WO 2013/172615 A1 describes a foldable support comprising an inclined portion which is provided to allow the back of an object to be laid thereon and a support portion having one side that is foldable and connected to the other side of the inclined portion.

KR 200313994 Y describes a stacked-plate type mobile device support frame.

WO 2004/006717 A1 describes a holder that is made up four plates which are connected to each other in a flexible manner.

However, the conventional support frame of the aforementioned mobile device is usually very complicated and irregular, and thus bringing tremendous inconvenience of repair and maintenance, storage, and carrying. Therefore, it is a main subject for related manufacturers to provide a feasible solution to overcome the aforementioned problems.

### SUMMARY OF THE INVENTION

Therefore, it is a primary objective of the invention to provide a stacked-plate type mobile device support frame, wherein when the mobile device support frame is closed, the plates of the mobile device support frame are stacked into a stacked-plate structure to facilitate users' storage and carrying, and when the stacked-plate type mobile device support frame is opened, the stand can be bent and folded into a mobile device support frame with different inclinations, and when the stacked-plate type mobile device support frame is opened, the stand can be bent and folded to place an external mobile device horizontally and increase the height for placing the external mobile device.

The invention is defined by the features of the independent claim.

To achieve the aforementioned and other objectives, the present invention discloses a stacked-plate type mobile device support frame comprising a support plate, a mobile device abutting plate and a base plate, wherein the support plate and the mobile device abutting plate have a first longitudinal bent portion therebetween; the base plate has a stopper plate, and the base plate and the stopper plate have a second longitudinal bent portion therebetween; the base plate and the mobile device abutting plate have a third longitudinal bent portion therebetween. When the stacked-plate type mobile device support frame is closed, the support plate, the mobile device abutting plate, the base plate and the stopper plate are bent, folded, and stacked into a stacked-plate form by using the first, second and third longitudinal bent portions. When the stacked-plate type mobile device support frame is opened, the stacked-plate type mobile device support frame can be bent and folded into a mobile device support frame with different inclinations. When the stacked-plate type mobile device support frame is opened, the stacked-plate type mobile device support frame can be bent and folded into a flat mobile device and the height for setting the mobile device can be increased.

### BRIEF DESCRIPTION OF THE DRAWINGS

FIG. 1 is a front perspective view of a stacked-plate type mobile device support frame in an unfolded status in accordance with the present invention;
FIG. 2 is a back perspective view of a stacked-plate type mobile device support frame in an unfolded status in accordance with the present invention;
FIG. 3 is a front perspective view of a stacked-plate type mobile device support frame in a folded status in accordance with the present invention;
FIG. 4 is a back exploded view of a stacked-plate type mobile device support frame in a folded status in accordance with the present invention;
FIG. 5 is a front perspective view of a stacked-plate type mobile device support frame in an opened status in accordance with a first embodiment of the present invention;
FIG. 6 is a back perspective view of a stacked-plate type mobile device support frame in an opened status in accordance with the first embodiment of the present invention;
FIG. 7 is a front perspective view of a stacked-plate type mobile device support frame in an opened status in accordance with a second embodiment of the present invention;
FIG. 8 is a back perspective view of a stacked-plate type mobile device support frame in an opened status in accordance with the second embodiment of the present invention;
FIG. 9 is a front perspective view of a stacked-plate type mobile device support frame in an opened status in accordance with a third embodiment of the present invention;

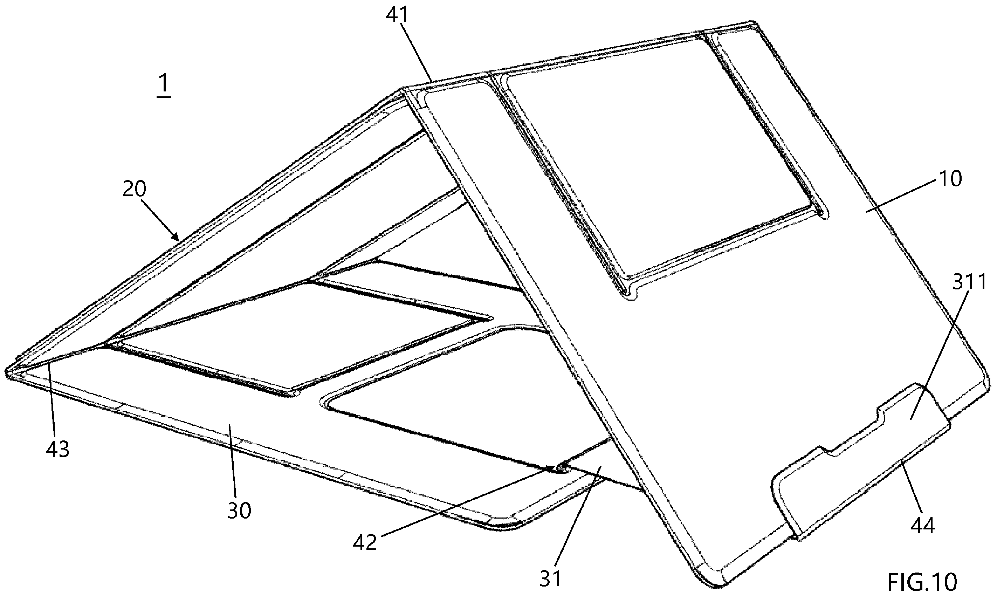

FIG. 10 is a back perspective view of a stacked-plate type mobile device support frame in an opened status in accordance with the third embodiment of the present invention;
FIG. 11 is a front perspective view of a stacked-plate type mobile device support frame in an opened status in accordance with a fourth embodiment of the present invention;
FIG. 12 is a back perspective view of a stacked-plate type mobile device support frame in an opened status in accordance with the fourth embodiment of the present invention;
FIG. 13 is a front perspective view of a stacked-plate type mobile device support frame in an opened status in accordance with a fifth embodiment of the present invention;
FIG. 14 is a back perspective view of a stacked-plate type mobile device support frame in an opened status in accordance with the fifth embodiment of the present invention; and
FIG. 15 is a schematic view showing a using status of a stacked-plate type mobile device support frame in an opened status in accordance with the present invention.

### BRIEF DESCRIPTION OF NUMERALS USED IN THE DRAWINGS:

1: Stacked-plate type mobile device support frame; 10: Support plate; 11: Third link plate; 20: Mobile device abutting plate; 21: Clip; 22: Second link plate; 23: Fourth link plate; 30: Base plate; 31: Stopper plate; 311: Bonded plate; 32: First link plate; 41: First longitudinal bent portion; 42: Second longitudinal bent portion; 43: Third longitudinal bent portion; 44: Fourth longitudinal bent portion; 45: Fifth longitudinal bent portion; and 46: Sixth longitudinal bent portion.

### DESCRIPTION OF THE PREFERRED EMBODIMENTS

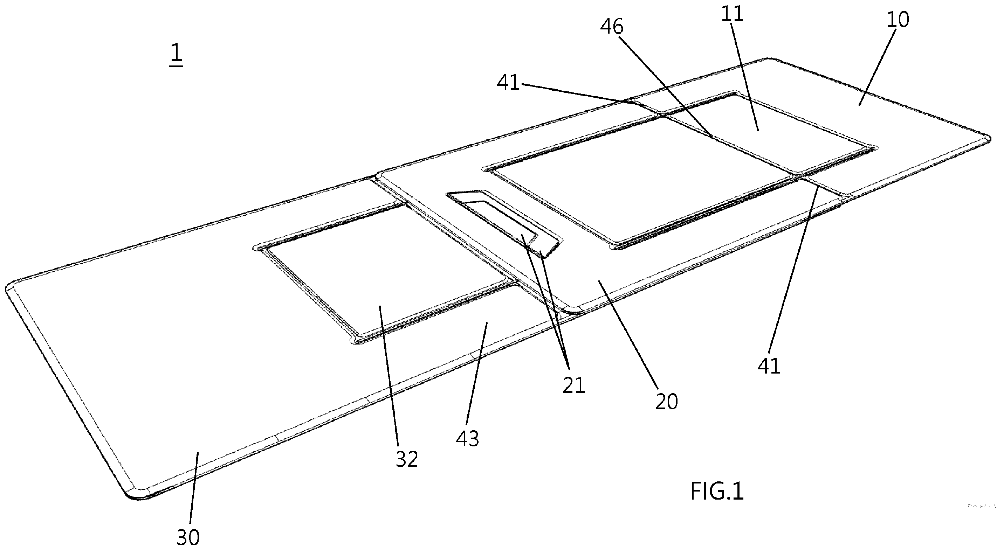

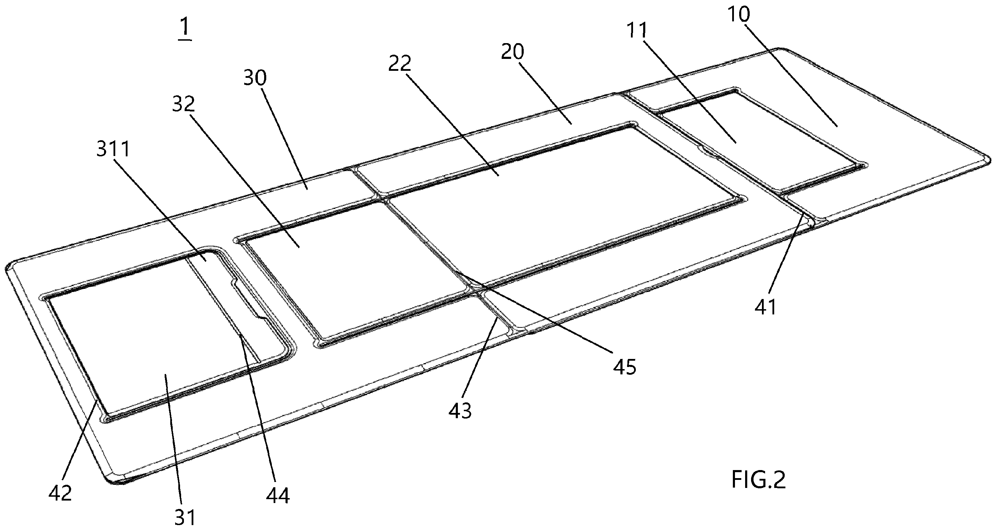

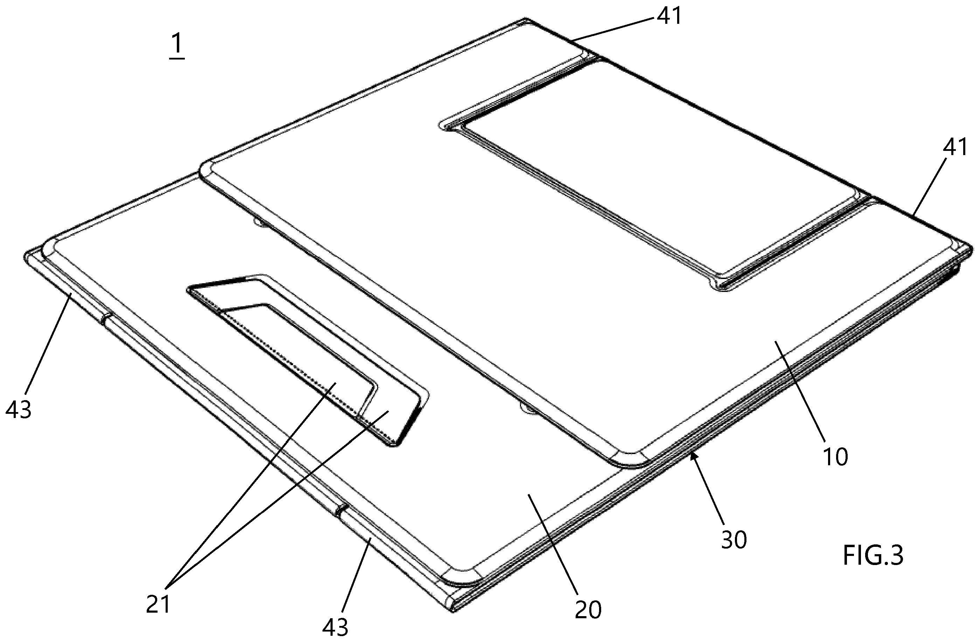

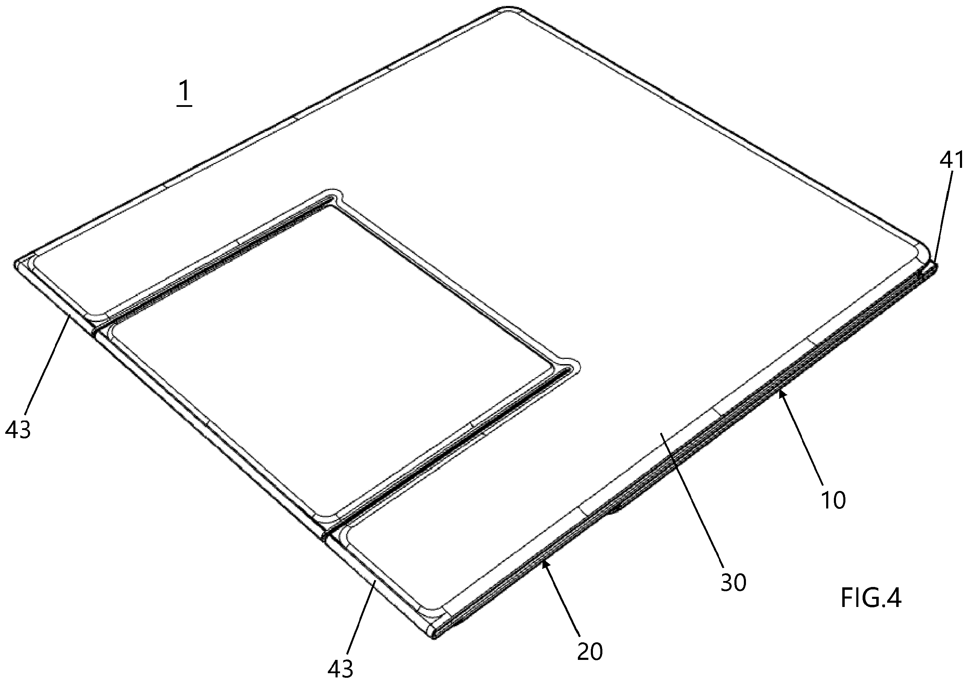

With reference to FIGS. 1 to 4 for the front and back perspective views of a stacked-plate type mobile device support frame in an unfolded status, and the front and back perspective views of the stacked-plate type mobile device support frame in a folded status in accordance with the present invention respectively, the stacked-plate type mobile device support frame 1 comprises a support plate 10, a mobile device abutting plate 20 and a base plate 30, and the support plate 10 and the mobile device abutting plate 20 have a first longitudinal bent portion 41 therebetween, and the base plate 30 has a stopper plate 31, and the base plate 30 and the stopper plate 31 have a second longitudinal bent portion 42 therebetween, and the base plate 30 and the mobile device abutting plate 20 have a third longitudinal bent portion 43 therebetween, wherein when the stacked-plate type mobile device support frame 1 is closed, the support plate 10 is bent to the mobile device abutting plate 20, and the base plate 30 is bent to the stopper plate 31, and the base plate 30 is bent to the mobile device abutting plate 20 by using the first longitudinal bent portion 41, the third longitudinal bent portion 43 and the second longitudinal bent portion 42 respectively, and then folded and stacked into a stacked-plate form.

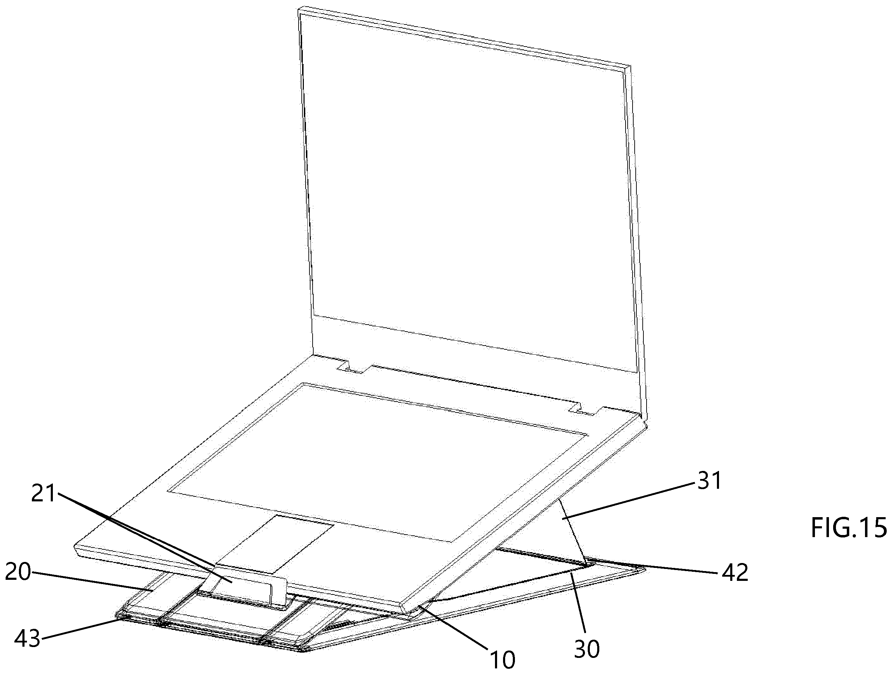

Wherein, the mobile device abutting plate 20 has at least one clip 21 for clamping an external mobile device (as shown in FIG. 15). In addition, a part of the support plate 10, the mobile device abutting plate 20 and the base plate 30 has a magnet.

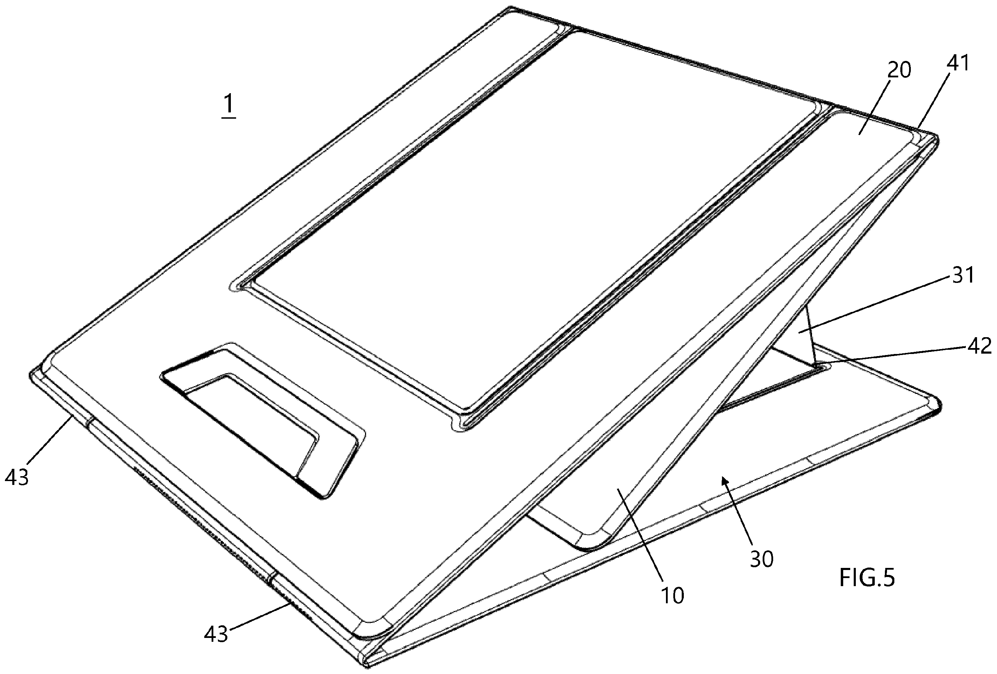

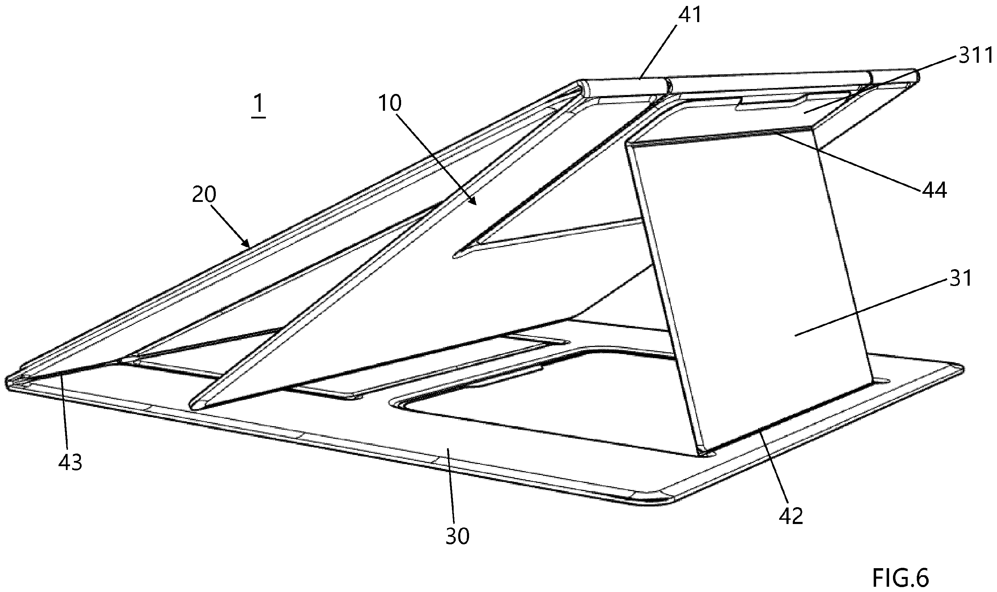

With reference to FIGS. 5 and 6 for the front and back perspective views of a stacked-plate type mobile device support frame in an opened status in accordance with the first embodiment of the present invention respectively, the present invention discloses a stacked-plate type mobile device support frame 1 in a first triangular mode having an inclined plane of approximately 25 degrees. When the stacked-plate type mobile device support frame 1 is opened, the third longitudinal bent portion 43 is bent to unfold the mobile device abutting plate 20, and the second longitudinal bent portion 42 is bent to unfold the stopper plate 31, and the first longitudinal bent portion 41 is bent to unfold the support plate 10, so that the stopper plate 31 supports the support plate 10, and the support plate 10 jointly supports the mobile device abutting plate 20, so as to form a mobile device support frame in the first triangular mode, and the mobile device abutting plate 20 abuts an external mobile device (as shown in FIG. 15), wherein the mobile device 5 described in this specification may be a notebook, a mobile phone, a tablet PC, a keyboard, etc.

Wherein, the stopper plate 31 further comprises a bonded plate 311 extending therefrom, and the stopper plate 31 and the bonded plate 311 have a fourth longitudinal bent portion 44 therebetween, and the bonded plate 311 is attached to the support plate 10, and a part of the whole of the bonded plate 311 and the support plate 10 can have a magnet.

In addition, the first longitudinal bent portion 41 may not be bent, so that the support plate 10 is not unfolded but remained to be stacked on the mobile device abutting plate 20. The stopper plate 31 supports the mobile device abutting plate 20, so that a part of the mobile device abutting plate 20 or a part of the support plate 10 abuts an external mobile device 5. The stopper plate 31 has a bonded plate 311 extending therefrom, and the bonded plate 311 is attached directly to the mobile device abutting plate 20, and a part of the mobile device abutting plate 20, the stopper plate 31 and the bonded plate 311 has a magnet.

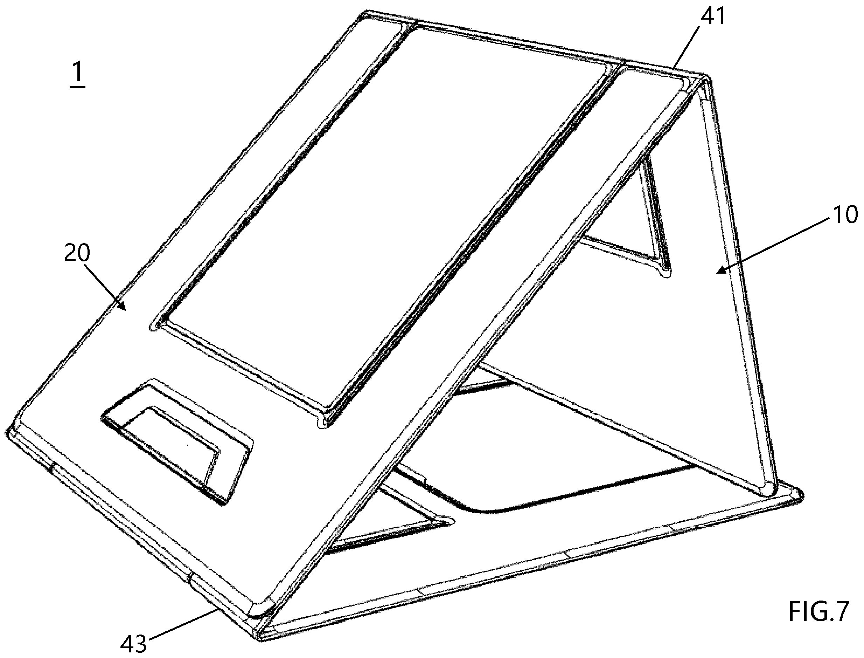

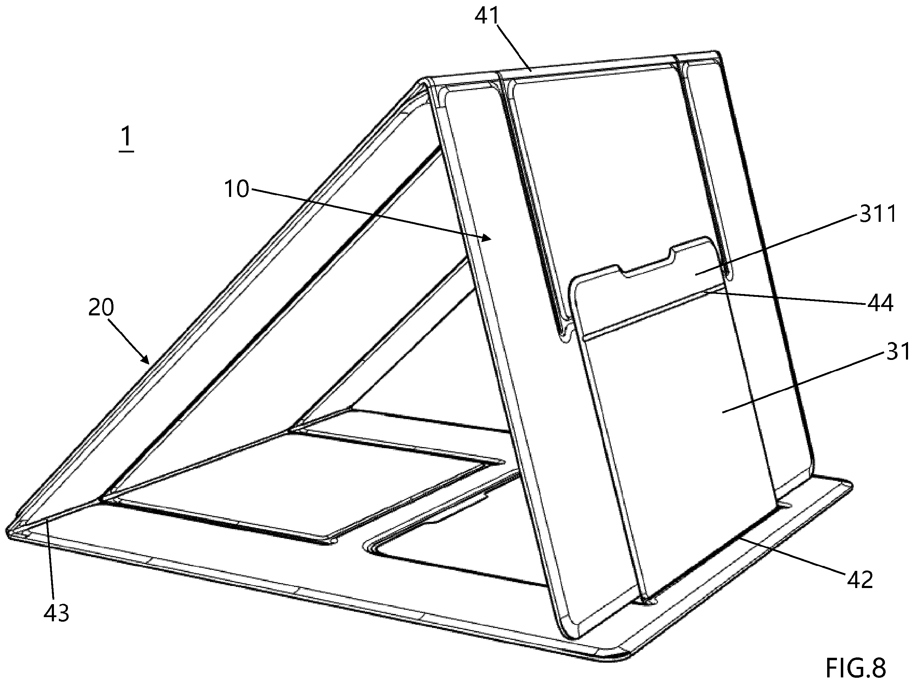

With reference to FIGS. 7 and 8 for the front and back perspective views of a stacked-plate type mobile device support frame in an opened status in accordance with the second embodiment of the present invention respectively, the present invention discloses a stacked-plate type mobile device support frame 1 in a second triangular mode having an inclined plane of approximately 45 degrees. When the stacked-plate type mobile device support frame 1 is opened, the first longitudinal bent portion 41 is bent to unfold the support plate 10, and the third longitudinal bent portion 43 is bent to unfold the mobile device abutting plate 20, and the second longitudinal bent portion 42 is bent to unfold the stopper plate 31, and the stopper plate 31 is attached and positioned to the support plate 10, so that the mobile device abutting plate 20 is inclined to abut an external mobile device and form a mobile device support frame in the second triangular mode.

In this embodiment, the stopper plate 31 further comprises a bonded plate 311 extending therefrom, and the stopper plate 31 and the bonded plate 311 have a fourth longitudinal bent portion 44 therebetween, and the bonded plate 311 and the stopper plate 31 are attached to the support plate 10. Wherein, a part or the whole of the stopper plate 31, the bonded plate 311 and the support plate 10 can have a magnet.

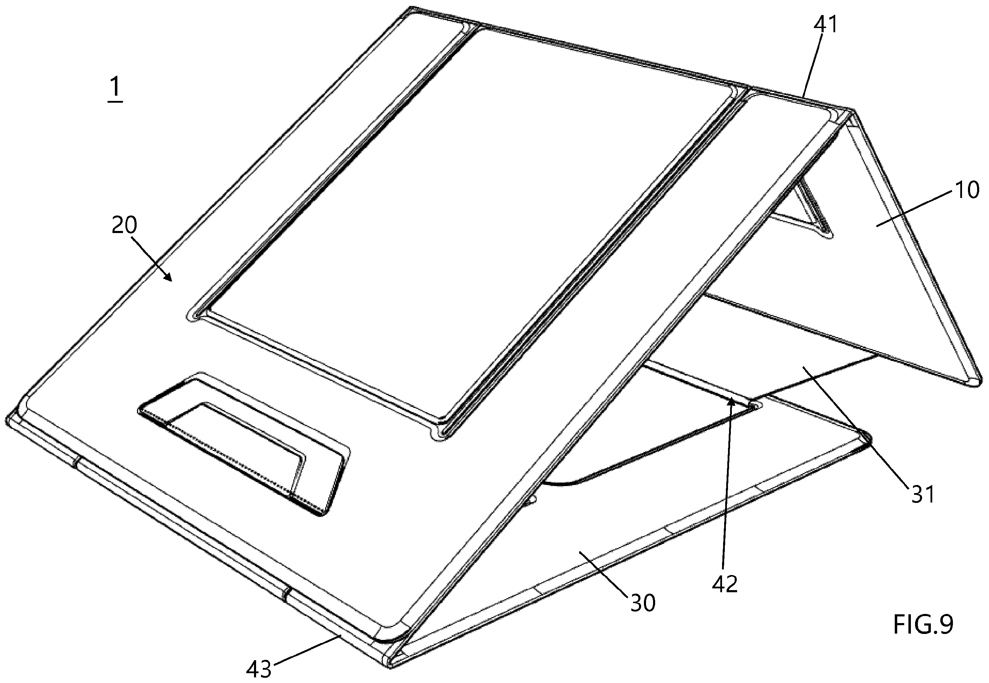

With reference to FIGS. 9 Sand 10 for the front and back perspective views of a stacked-plate type mobile device support frame in an opened status in accordance with the third embodiment of the present invention respectively, the present invention discloses a stacked-plate type mobile device support frame 1 in a third triangular mode having an inclined plane of approximately 35 degrees. The stopper plate 31 further comprises a bonded plate 311 extending therefrom, and the stopper plate 31 and the bonded plate 311 have a fourth longitudinal bent portion 44 therefrom. When the stacked-plate type mobile device support frame 1 is opened, the first longitudinal bent portion 41 is bent to unfold the support plate 10, and the third longitudinal bent portion 43 is bent to unfold the mobile device abutting plate 20, and the second longitudinal bent portion 42 is bent to unfold the stopper plate 31, and the fourth longitudinal bent portion 44 is bent to fold the bonded plate 311, and the bonded plate 311 is attached to the support plate 10, so that the mobile device abutting plate 20 is inclined to abut an external mobile device and form a mobile device support frame in the third triangular mode.

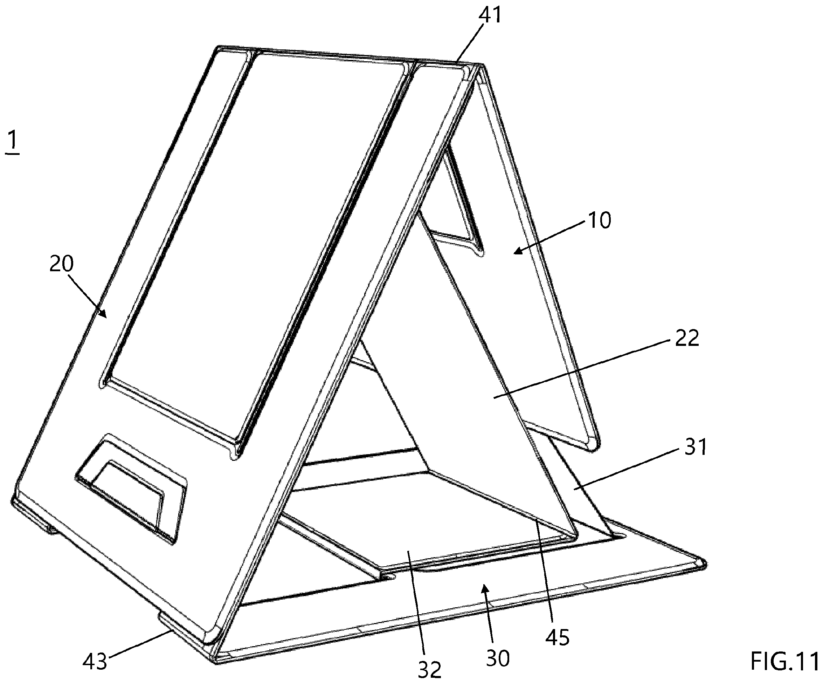

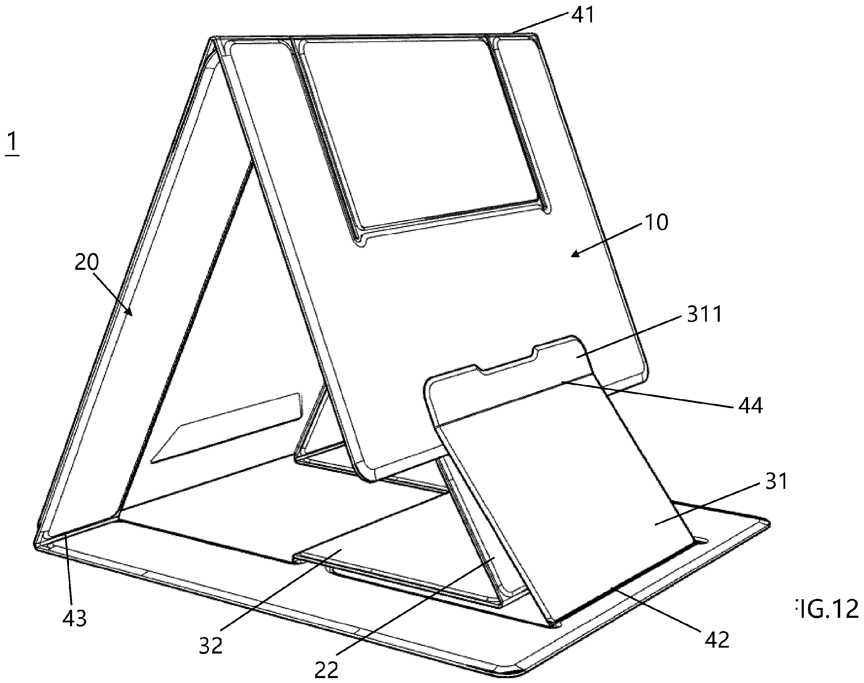

With reference to FIGS. 11 and 12 for the front and back perspective views of a stacked-plate type mobile device support frame in an opened status in accordance with the fourth embodiment of the present invention respectively, the present invention discloses a stacked-plate type mobile device support frame 1 in a fourth triangular mode having an inclined plane of approximately 60 degrees. The base plate 30 has a first link plate 32, and the mobile device abutting plate 20 has a second link plate 22, and the first link plate 32 and the second link plate 22 have a fifth longitudinal bent portion 45 therebetween. When the stacked-plate type mobile device support frame 1 is opened, the third longitudinal bent portion 43 is bent to unfold the mobile device abutting plate 20, and the fifth longitudinal bent portion 45 is bent to unfold the first link plate 32 and second link plate 22, and the first link plate 32 is attached to the base plate 30, and the second link plate 22 supports the mobile device abutting plate 20, so that the mobile device abutting plate 20 is inclined to abut an external mobile device and form a mobile device support frame in a fourth triangular mode.

In this embodiment, the first longitudinal bent portion 41 is bent to unfold the support plate 10 and abutted against the second link plate 22 to facilitate the mobile device abutting plate 20 to place the external mobile device horizontally. In addition, the stopper plate 31 further comprises a bonded plate 311 extending therefrom, and the stopper plate 31 and the bonded plate 311 have a fourth longitudinal bent portion 44 therebetween, and the second longitudinal bent portion 44 may be bent slightly to attach the bonded plate 311 to the support plate 10. Wherein, a part or the whole of the stopper plate 31, the bonded plate 311 and the support plate 10 can have a magnet.

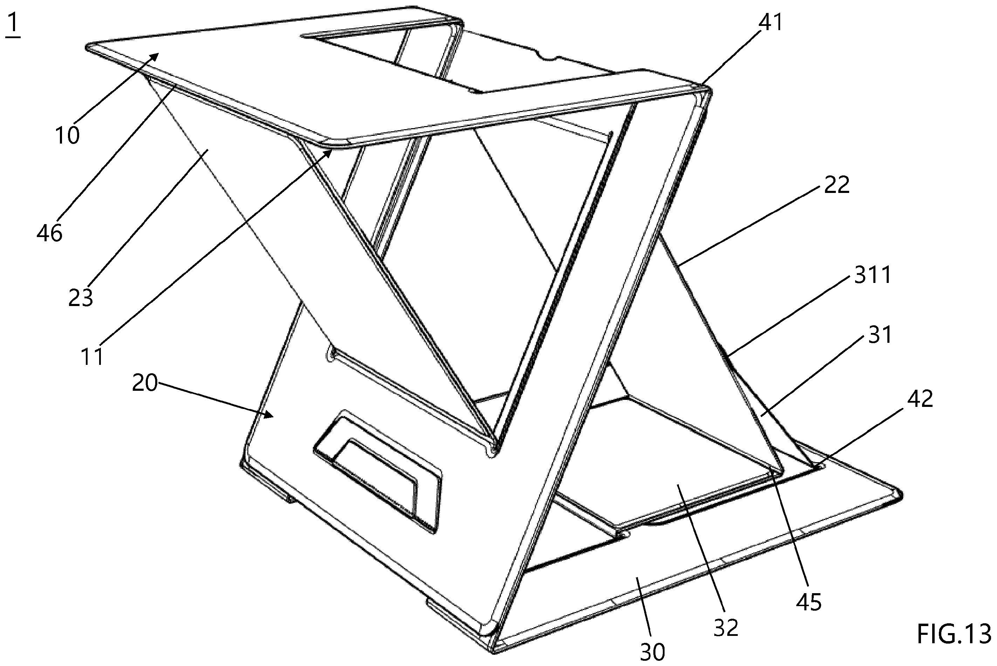

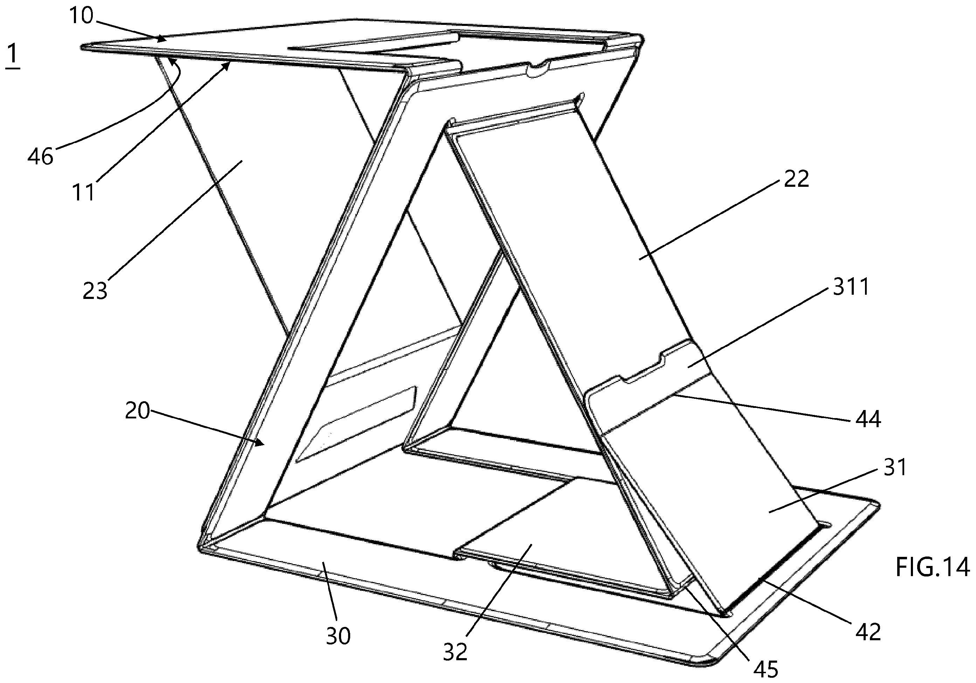

With reference to FIGS. 13 and 14 for the front and back perspective views of a stacked-plate type mobile device support frame in an opened status in accordance with the second embodiment of the present invention respectively, the present invention discloses a stacked-plate type mobile device support frame 1 in a fifth double-triangular mode capable of placing a mobile device horizontally. Continued from the fourth embodiment above, the support plate 10 has a third link plate 11, and the mobile device abutting plate 20 has a fourth link plate 23, and the third link plate 11 and the fourth link plate 23 have a sixth longitudinal bent portion 46 therebetween. When the stacked-plate type mobile device support frame 1 is opened, the first longitudinal bent portion 41 is bent to unfold the support plate 10, and the sixth longitudinal bent portion 46 is bent to unfold the third link plate 11 and fourth link plate 23, so that the third link plate 11 is attached to the support plate 10, and the fourth link plate 23 supports the support plate 10, so as to achieve the effect of transforming the original mobile device abutting plate 20 into the support plate 10, and the original support plate 10 is transformed to place the mobile device horizontally and increase the height for placing the mobile device. Therefore, the mobile device support frame is formed into a fifth double-triangular mode.

In this embodiment, the stopper plate 31 further comprises a bonded plate 311 extending therefrom, and the stopper plate 31 and the bonded plate 311 have a fourth longitudinal bent portion 44 therebetween, and the second longitudinal bent portion 42 is bent to attach the bonded plate 311 to the second link plate 22. Wherein, a part of the stopper plate 31, the bonded plate 311, and the second link plate 22 has a magnet.

## Claims

1. A stacked-plate type mobile device support frame (1), comprising:
a support plate (10);
a mobile device abutting plate (20), and the support plate (10) and the mobile device abutting plate (20) having a first longitudinal bent portion (41) therebetween; and
a base plate (30), having a stopper plate (31), and the base plate (30) and the stopper plate (31) having a second longitudinal bent portion (42) therebetween, and the base plate (30) and the mobile device abutting plate (20) having a third longitudinal bent portion (43) therebetween, wherein
when the stacked-plate type mobile device support frame (1) is folded, the support plate (10) is bent to the mobile device abutting plate (20), the base plate (30) is bent to the stopper plate (31) and the base plate (30) is bent to the mobile device abutting plate (20) by using the first longitudinal bent portion (41), the third longitudinal bent portion (43) and the second longitudinal bent portion (42) respectively, so that the support plate (10), the mobile device abutting plate (20) and the base plate (30) can be folded into a stacked-plate form, wherein
the base plate has a first link plate (32), and the mobile device abutting plate (20) has a second link plate (22), and the first link plate (32) and the second link plate (22) have a fifth longitudinal bent portion (45) therebetween, when the stacked-plate type mobile device support frame (1) is opened, the third longitudinal bent portion (43) is bent to unfold the mobile device abutting plate (20), and the fifth longitudinal bent portion (45) is bent to unfold the first link plate (32) and the second link plate (22), and the first link plate (32) is attached to the base plate (30), and the second link plate (22) supports the mobile device abutting plate (20) to form a mobile device support frame in a triangular mode.

2. The stacked-plate type mobile device support frame (1) as claimed in claim 1, wherein when the stacked-plate type mobile device support frame (1) is opened, the first longitudinal bent portion (41) is bent to unfold the support plate (10), and the third longitudinal bent portion (43) is bent to unfold the mobile device abutting plate (20), and the second longitudinal bent portion (42) is bent to unfold the stopper plate (31), and the stopper plate (31) supports the support plate (10) to form a mobile device support frame in a triangular mode.

3. The stacked-plate type mobile device support frame (1) as claimed in claim 2, wherein the stopper plate (31) further has a bonded plate (311) extending therefrom, and the stopper plate (31) and the bonded plate(311) having a fourth longitudinal bent portion (44) therebetween, and the bonded plate (311) is attached to the support plate (10).

4. The stacked-plate type mobile device support frame (1) as claimed in claim 1, wherein when the stacked-plate type mobile device support frame (1) is opened, the first longitudinal bent portion (41) is bent to unfold the support plate (10), and the third longitudinal bent portion (43) is bent to unfold the mobile device abutting plate (20), and the second longitudinal bent portion (42) is bent to unfold the stopper plate (31), and the stopper plate (31) is attached to the support plate (10) to form a mobile device support frame in a triangular mode.

5. The stacked-plate type mobile device support frame (1) as claimed in claim 1, wherein the stopper plate (31) further has a bonded plate (311) extending therefrom, and the stopper plate (31) and the bonded plate (311) having a fourth longitudinal bent portion (44) therebetween, and when the stacked-plate type mobile device support frame (1) is opened, the first longitudinal bent portion is bent to unfold the support plate (10), and the third longitudinal bent portion (43) is bent to unfold the mobile device abutting plate (20), and the second longitudinal bent portion (42) is bent to unfold the stopper plate (31), and the fourth longitudinal bent portion (44) to fold the bonded plate (311), and the bonded plate (311) is attached to the support plate (10) to form a mobile device support frame in a triangular mode.

6. The stacked-plate type mobile device support frame (1) as claimed in claim 1, wherein the support plate (10) has a third link plate (11), and the mobile device abutting plate (20) has a fourth link plate (23), and the third link plate (11) and the fourth link plate (23) have a sixth longitudinal bent portion (46) therebetween, and when the stacked-plate type mobile device support frame (1) is opened, the first longitudinal bent portion (41) is bent to unfold the support plate (10), and the sixth longitudinal bent portion (46) is bent to unfold the third link plate (11) and the fourth link plate (23), and the third link plate (11) is attached to the support plate (10) and the fourth link plate (23) supports the support plate (10) to form a mobile device support frame in a triangular mode.

7. The stacked-plate type mobile device support frame (1) as claimed in claim 1, wherein the mobile device abutting plate (20) has at least one clip (21) provided for clamping an external mobile device.

8. The stacked-plate type mobile device support frame (1) as claimed in claim 1, wherein a part of the support plate (10), the mobile device abutting plate (20) and the base plate (30) has a magnet.

9. The stacked-plate type mobile device support frame (1) as claimed in claim 3, wherein a part of the stopper plate (31) and the bonded plate (311) has a magnet.

## Patentansprüche

1. Halterung (1) für Mobilgerät in Form von einer gefalteten Platte, umfassend
eine Halteplatte (10);
eine Mobilgerät-Ablageplatte (20), wobei zwischen der Halteplatte (10) und der Mobilgerät-Ablageplatte (20) ein erster Längsbiegeabschnitt (41) vorgesehen ist; und
eine Grundplatte (30), die eine Stopperplatte (31) aufweist, wobei zwischen der Grundplatte (30) und der Stopperplatte (31) ein zweiter Längsbiegeabschnitt (42) vorgesehen ist, wobei zwischen der Grundplatte (30) und der Mobilgerät-Ablageplatte (20) ein dritter Längsbiegeabschnitt (43) vorgesehen ist,
wobei, wenn die Halterung (1) für Mobilgerät in Form von Faltplatte gefaltet wird, die Halteplatte (10) zur Mobilgerät-Ablageplatte (20) gebogen wird, die Grundplatte (30) zur Stopperplatte (31) gebogen wird und die Grundplatte (30) zur Mobilgerät-Ablageplatte (20) gebogen wird, indem der erste Längsbiegeabschnitt (41), der dritte Längsbiegeabschnitt (43) und der zweite Längsbiegeabschnitt (42) genutzt werden, so dass die Halteplatte (10), die Mobilgerät-Ablageplatte (20) und die Grundplatte (30) zu einer gefalteten Platte gefaltet werden können,
wobei die Grundplatte eine erste Klappplatte (32) und die Mobilgerät-Ablageplatte (20) eine zweite Klappplatte (22) aufweist, wobei zwischen der ersten Klappplatte (32) und der zweiten Klappplatte (22) ein fünfter Längsbiegeabschnitt (45) vorgesehen ist, wobei, wenn die Halterung (1) für Mobilgerät in Form von einer gefalteten Platte geöffnet wird, der dritte Längsbogenabschnitt (43) gebogen wird, um die Mobilgerät-Ablageplatte (20) zu entfalten, und die fünfte Längsbogenabschnitt (45) gebogen wird, und die erste Klappplatte (32) und die zweite Klappplatte (22) zu enfalten, wobei die erste Klappplatte (32) an der Grundplatte (30) anliegt und die zweite Klappplatte (22) die Mobilgerät-Ablageplatte (20) stützt, um eine Halterung für Mobilgerät in einer Dreiecksform zu bilden.

2. Halterung (1) für Mobilgerät in Form von einer gefalteten Platte, nach Anspruch 1, **dadurch gekennzeichnet, dass**, wenn die Halterung (1) für Mobilgerät in Form von einer gefalteten Platte geöffnet wird, der erste Längsbiegeabschnitt (41) gebogen wird, um die Halteplatte (10) zu entfalten, der dritte Längsbogenabschnitt (43) gebogen wird, um die Mobilgerät-Ablageplatte (20) zu entfalten, und der zweite Längsbiegeabschnitt (42) gebogen wird, um die Stopperplatte (31) zu entflaten, wobei die Stopperplatte (31) die Halteplatte (10) stützt, um eine Halterung für Mobilgerät in einer Dreiecksform zu bilden.

3. Halterung (1) für Mobilgerät in Form von einer gefalteten Platte, nach Anspruch 2, **dadurch gekennzeichnet, dass** die Stopperplatte (31) zusätzlich eine Klebeplatte (311) aufweist, die sich davon erstreckt, wobei zwischen der Stopperplatte (31) und der Klebeplatte (311) ein vierter Längsbiegeabschnitt (44) vorgesehen ist, und wobei die Klebeplatte (311) an der Halteplatte (10) anliegt.

4. Halterung (1) für Mobilgerät in Form von einer gefalteten Platte, nach Anspruch 1, **dadurch gekennzeichnet, dass**, wenn die Halterung (1) für Mobilgerät in Form von einer gefalteten Platte geöffnet wird, der erste Längsbiegeabschnitt (41) gebogen wird, um die Halteplatte (10) zu entfalten, der dritte Längsbiegeabschnitt (43) gebogen wird, um die Mobilgerät-Ablageplatte (20) zu entfalten, und der zweite Längsbiegeabschnitt (42) gebogen wird, um die Stopperplatte (31) zu entfalten, wobei die Stopperplatte (31) an der Halteplatte (10) anliegt, um eine Halterung für Mobilgerät in einer Dreiecksform zu bilden.

5. Halterung (1) für Mobilgerät in Form von einer gefalteten Platte, nach Anspruch 1, **dadurch gekennzeichnet, dass** die Stopperplatte (31) eine Klebeplatte (311) aufweist, die sich davon erstreckt, wobei zwischen der Stopperplatte (31) und der Klebeplatte (311) ein vierter Längsbiegeabschnitt (44) vorgesehen ist, wobei, wenn die Halterung (1) für Mobilgerät in Form von einer gefalteten Platte geöffnet wird, der erste Längsbiegeabschnitt (41) gebogen wird, um die Halteplatte (10) zu entfalten, der dritte Längsbiegeabschnitt (43) gebogen wird, um die Mobilgerät-Ablageplatte (20) zu entfalten, der zweite Längsbiegeabschnitt (42) gebogen wird, um die Stopperplatte (31) zu entfalten, und der vierte Längsbiegeabschnitt (44) gebogen wird, um die Klebeplatte (311) zu falten, wobei die Klebeplatte (311) an der Halteplatte (10) anliegt, um eine Halterung für Mobilgerät in einer Dreiecksform zu bilden.

6. Halterung (1) für Mobilgerät in Form von einer gefalteten Platte, nach Anspruch 1, **dadurch gekennzeichnet, dass** die Halteplatte (10) eine dritte Klappplatte (11) und die Mobilgerät-Ablageplatte (20) eine vierte Klappplatte (23) aufweist, wobei zwischen der dritten Klappplatte (11) und der vierten Klappplatte (23) ein sechster Längsbiegeabschnitt (46) vorgesehen ist, wobei, wenn die Halterung (1) für Mobilgerät in Form von einer gefalteten Platte geöffnet wird, der erste Längsbiegeabschnitt (41) gebogen wird, um die Halteplatte (10) zu entfalten, und der sechste Längsbiegeabschnitt (46) gebogen wird, um die dritte Klappplatte (11) und die vierte Klappplatte (23) zu entfalten, wobei die dritte Klappplatte (11) an der Halteplatte (10) anliegt, und wobei die vierte Klappplatte (23) die Halteplatte (10) stützt, um eine Halterung für Mobilgerät in einer Dreiecksform zu bilden.

7. Halterung (1) für Mobilgerät in Form von einer gefalteten Platte, nach Anspruch 1, **dadurch gekennzeichnet, dass** die Mobilgerät-Ablageplatte (20) mindestens eine Klammer (21) zum Festklemmen eines externen Mobilgeräts aufweist.

8. Halterung (1) für Mobilgerät in Form von einer gefalteten Platte, nach Anspruch 1, **dadurch gekennzeichnet, dass** ein Teil der Halteplatte (10), der Mobilgerät-Ablageplatte (20) und der Grundplatte (30) einen Magneten aufweisen.

9. Halterung (1) für Mobilgerät in Form von einer gefalteten Platte, nach Anspruch 3, **dadurch gekennzeichnet, dass** ein Teil der Stopperplatte (31) und der Klebeplatte (311) einen Magneten aufweisen.

## Revendications

1. Cadre de support d'appareil mobile de type à empilement de plaques (1), **caractérisé par le fait qu'**il comprend :
une plaque de support (10) ;
une plaque d'appui pour appareil mobile (20), et la plaque de support (10) et la plaque d'appui
pour appareil mobile (20) comportant une première partie pliée longitudinale (41) entre elles ; et
une plaque de base (30), comportant une plaque de butée (31), et la plaque de base (30) et la plaque de butée (31) comportant une deuxième partie pliée longitudinale (42) entre elles, et la plaque de base (30) et la plaque d'appui pour appareil mobile (20) comportant une troisième partie pliée longitudinale (43) entre elles,
lorsque le cadre de support d'appareil mobile de type à empilement de plaques (1) est rabattu, la plaque de support (10) est pliée vers la plaque d'appui pour appareil mobile (20), la plaque de base (30) est pliée vers la plaque de butée (31) et la plaque de base (30) est pliée vers la plaque d'appui pour appareil mobile (20) par l'utilisation, respectivement, de la première partie pliée longitudinale (41), de la troisième partie pliée longitudinale (43) et de la deuxième partie pliée longitudinale (42), de sorte que la plaque de support (10), la plaque d'appui pour appareil mobile (20) et la plaque de base (30) peuvent être rabattues sous forme de plaques empilées, la plaque de base comporte une première plaque de liaison (32), et la plaque d'appui pour appareil mobile (20) comporte une deuxième plaque de liaison (22), et la première plaque de liaison (32) et la deuxième plaque de liaison (22) comportent une cinquième partie pliée longitudinale (45) entre elles, lorsque le cadre de support d'appareil mobile de type à empilement de plaques (1) est ouvert, la troisième partie pliée longitudinale (43) est pliée pour déployer la plaque d'appui pour appareil mobile (20), et la cinquième partie pliée longitudinale (45) est pliée pour déployer la première plaque de liaison (32) et la deuxième plaque de liaison (22), et la première plaque de liaison (32) est attachée à la plaque de base (30), et la deuxième plaque de liaison (22) supporte la plaque d'appui pour appareil mobile (20) pour former un cadre de support d'appareil mobile en mode triangulaire.

2. Cadre de support d'appareil mobile de type à empilement de plaques (1) selon la revendication 1, **caractérisé par le fait que** lorsque le cadre de support d'appareil mobile de type à empilement de plaques (1) est ouvert, la première partie pliée longitudinale (41) est pliée pour déployer la plaque de support (10), et la troisième partie pliée longitudinale (43) est pliée pour déployer la plaque d'appui pour appareil mobile (20), et la deuxième partie pliée longitudinale (42) est pliée pour déployer la plaque de butée (31), et la plaque de butée (31) supporte la plaque de support (10) pour former un cadre de support d'appareil mobile en mode triangulaire.

3. Cadre de support d'appareil mobile de type à empilement de plaques (1) selon la revendication 2, **caractérisé par le fait que** lorsque la plaque de butée (31) comporte en outre une plaque liée (311) s'étendant à partir de celle-ci, et la plaque de butée (31) et la plaque liée (311) comportant une quatrième partie pliée longitudinale (44) entre elles, et la plaque liée (311) est attachée à la plaque de support (10).

4. Cadre de support d'appareil mobile de type à empilement de plaques (1) selon la revendication 1, **caractérisé par le fait que** lorsque le cadre de support d'appareil mobile de type à empilement de plaques (1) est ouvert, la première partie pliée longitudinale (41) est pliée pour déployer la plaque de support (10), et la troisième partie pliée longitudinale (43) est pliée pour déployer la plaque d'appui pour appareil mobile (20), et la deuxième partie pliée longitudinale (42) est pliée pour déployer la plaque de butée (31), et la plaque de butée (31) est attachée à la plaque de support (10) pour former un cadre de support d'appareil mobile en mode triangulaire.

5. Cadre de support d'appareil mobile de type à empilement de plaques (1) selon la revendication 1, **caractérisé par le fait que** la plaque de butée (31) comporte en outre une plaque liée (311) s'étendant à partir de celle-ci, et la plaque de butée (31) et la plaque liée (311) comportant une quatrième partie pliée longitudinale (44) entre elles, et lorsque le cadre de support d'appareil mobile de type à empilement de plaques (1) est ouvert, la première partie pliée longitudinale (41) est pliée pour déployer la plaque de support (10), et la troisième partie pliée longitudinale (43) est pliée pour déployer la plaque d'appui pour appareil mobile (20), et la deuxième partie pliée longitudinale (42) est pliée pour déployer la plaque de butée (31), et la quatrième partie pliée longitudinale (44) pour rabattre la plaque liée (311), et la plaque liée (311) est attachée à la plaque de support (10) pour former un cadre de support d'appareil mobile en mode triangulaire.

6. Cadre de support d'appareil mobile de type à empilement de plaques (1) selon la revendication 1, **caractérisé par le fait que** la plaque de support (10) comporte une troisième plaque de liaison (11), et la plaque d'appui pour appareil mobile (20) comporte une quatrième plaque de liaison (23), et la troisième plaque de liaison (11) et la quatrième plaque de liaison (23) comportent une sixième partie pliée longitudinale (46) entre elles, et lorsque le cadre de support d'appareil mobile de type à empilement de plaques (1) est ouvert, la première partie pliée longitudinale (41) est pliée pour déployer la plaque de support (10), et la sixième partie pliée longitudinale (46) est pliée pour déployer la troisième plaque de liaison (11) et la quatrième plaque de liaison (23), et la troisième plaque de liaison (11) est attachée à la plaque de support (10) et la quatrième plaque de liaison (23) supporte la plaque de support (10) pour former un cadre de support d'appareil mobile en mode triangulaire.

7. Cadre de support d'appareil mobile de type à empilement de plaques (1) selon la revendication 1, **caractérisé par le fait que** la plaque d'appui pour appareil mobile (20) comporte au moins un dispositif de retenue (21) permettant de retenir un appareil mobile externe.

8. Cadre de support d'appareil mobile de type à empilement de plaques (1) selon la revendication 1, **caractérisé par le fait qu'**une partie de la plaque de support (10), de la plaque d'appui pour appareil mobile (20) et de la plaque de base (30) comportent un aimant.

9. Cadre de support d'appareil mobile de type à empilement de plaques (1) selon la revendication 3, **caractérisé par le fait qu'**une partie de la plaque de butée (31) et de la plaque liée (311) comportent un aimant.
